(19) Europäisches Patentamt
European Patent Office
Office européen des brevets

(11) **EP 3 671 579 A1**

(12) **EUROPEAN PATENT APPLICATION**

(43) Date of publication:
**24.06.2020   Bulletin 2020/26**

(51) Int Cl.:
***G06Q 10/00*** *(2012.01)*

(21) Application number: **18214098.8**

(22) Date of filing: **19.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
 • **Beyer, Dagmar
  80339 München (DE)**

 • **Joblin, Mitchell
  81825 München (DE)**
 • **Lukas, Lutz
  91052 Erlangen (DE)**
 • **Paul, Benjamin
  12489 Berlin (DE)**
 • **Ringsquandl, Martin
  83022 Rosenheim (DE)**
 • **Rümmele, Nataliia
  81739 München (DE)**
 • **Vaidya, Amit
  40476 Düsseldorf (DE)**

(54) **METHOD AND SYSTEM FOR PROVIDING A SERVICE FOR A COMPLEX INDUSTRIAL SYSTEM**

(57)     A computer implemented method for providing a service for a complex industrial system, the method comprising the steps of providing (S1) Bill of Materials, BoM, trees of system component instances of said complex industrial system; generating (S2) automatically a unified BoM data model by clustering matching nodes within the provided BoM trees; and performing (S3) the service for the complex industrial system based on the generated unified BoM data model.

FIG 1

EP 3 671 579 A1

**Description**

The invention relates to a computer implemented method and a computer implemented service provision platform adapted to provide a service to a complex industrial system such as an automation system.

Specifications for in>dustrial machinery designs of machines in a complex industrial system can vary for different machines, even if they are stemming from the same product family. These specification mismatches can influence negatively maintenance and/or service activities for the respective industrial system. Because of the specification mismatches, service engineers are forced to manually compare and resolve these specification mismatches, i.e. they have to determine technically identical parts within different specifications to apply consistent maintenance and/or service actions relating to the actual physical components.

Industrial machinery components within a complex industrial system are engineered with variations in component designs. This implies that machines or machine components stemming from the same product family may contain different component specifications. These specifications are referred to as material in an engineering Bill-of-Materials. Typically, a Bill-of-Materials BoM does not only contain a list of components or parts, but also their composition relation that states if a part or component is composed by a set of other components or system parts. A specification mismatch is often a consequence of BoM data management issues. Consequently, component design engineers often cannot reuse existing machine specifications that have been designed previously, since there is no unified data model that would allow a structured search through existing designs. For example, a Bill-of-Materials BoM for two different machines of the same product family may contain different components (or the same components with a different composition relationship) although the physical compositions of the components of the machines are identical. Producing such machines forming part of a complex industrial system according to misaligned specifications is less problematic because production engineers may verify that two designs are conceptually identical, for example by comparing the respective technical drawings of the components.

However, when it comes to maintenance and/or repair services, for instance long-term services of a fleet of machines (e.g. a 10-year service for a fleet of a plurality of gas turbines), misaligned specifications can become extremely problematic for service engineers. For example, when each of e.g. 24 machines come with misaligned specifications, with each specification containing approximately 100,000 components or material positions, then the service engineer has to manage and to maintain service and/or spare part information for 2.4 million material specifications instead of only 100,000 material specifications. Having less material specifications makes the maintenance of this fleet of machines significantly less complex.

Furthermore, if a certain component requires a service that includes spare parts, the service engineer has to clear suitable spare parts that are then shipped to the machine's installation site along with a service action specification. Optimally, the identification of cleared spare parts for each material component should be done only once and then held for all machines that contain the affected component. However, since no unified structure and/or data model does exist for different machines of the complex industrial system, this task has to be carried out according to a worst case scenario for each machine individually which is extremely time-consuming and tedious for the service engineer.

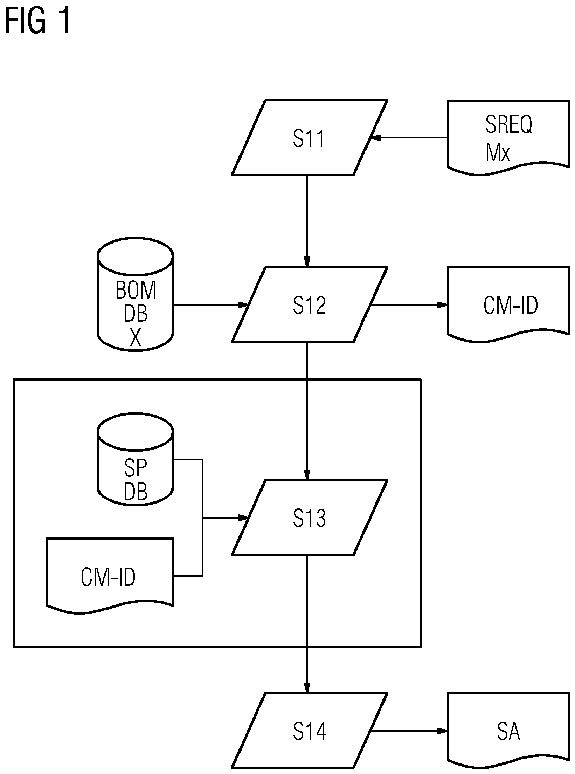

Fig. 1 shows a flowchart to illustrate a conventional process of handling a service request. As can be seen in Fig. 1, a service request SREQ for a machine X is first analysed in step S11 and a lookup of material specification in a BoM for the respective machine X is performed in step S12 using a BoM database of machine X. The lookup step S12 can provide a custom material ID CMID as shown in Fig. 1. To find a fitting or suitable spare part in step S13, a spare part database SPDB is searched using the custom material ID CMID. This step S13 has to be performed for each service request and for each machine X. Consequently, the search is very time-consuming and error-prone. The identification of the suitable spare part according to a form-fit function requirement is time-consuming and has to be executed for each service request in the conventional process illustrated in Fig. 1. As can be seen in Fig. 1, after the search has been performed, a service action can be finalized in step S14 to provide a specified service action SA including the found spare part as illustrated in Fig. 1. As illustrated in the process of Fig. 1, in a conventional system, service engineers have to manually search in different databases and have to go through documentations to validate if two components or parts are technically identical and therefore replaceable by a certain spare part. This might even require visual inspection of technical drawings which is immensely time-consuming. Manual creation of a unified view is therefore tedious, time-consuming, and error-prone.

Accordingly, it is an object of the present invention to provide a method and a system for providing a service for a complex industrial system, in particular a maintenance service being less time-consuming and less error-prone.

This object is achieved according to a first aspect of the present invention by a computer implemented method for providing a service for a complex industrial system comprising the features of claim 1.

The invention provides according to the first aspect of the present invention a computer implemented method for providing a service for a complex industrial system, the method comprising the steps of:

providing Bill of Materials, BoM, trees of system component instances of the complex industrial system,

generating automatically a unified BoM data model by clustering matching nodes within the provided BoM trees and performing the service for the complex industrial system based on the generated unified BoM data model.

In a possible embodiment of the method according to the first aspect of the present invention, each BoM tree is configured to represent a corresponding physical system component instance and is stored in a central or distributed database.

In a further possible embodiment of the method according to the first aspect of the present invention, the BoM tree of a system component instance is a rooted tree including a set of nodes representing subcomponents of the system component instance connected via a set of edges representing relations between the subcomponents of the system component instance.

In a further possible embodiment of the method according to the first aspect of the present invention, each node of a BoM tree representing a subcomponent of the respective system component instance comprises attached attributes indicating properties of the respective subcomponent.

In a still further possible embodiment of the method according to the first aspect of the present invention, the unified BoM data model is generated iteratively starting from an initial set of clusters derived from nodes of a reference BoM tree by performing a bipartite matching between a current set of clusters and nodes of an additional BoM tree to merge matching nodes of the additional BoM tree into the current set of clusters and forming an additional cluster for each not-matching node of the additional BoM tree, wherein the resulting clusters are connected as nodes in an unpruned BoM graph.

In a further possible embodiment of the method according to the first aspect of the present invention, the bipartite matching is performed on the basis of a calculated similarity score between a cluster and a node of the additional BoM tree.

In a further possible embodiment of the method according to the first aspect of the present invention, the calculated similarity score takes into account the structural relations of nodes within the BoM trees and/or attributes attached to the respective nodes in the BoM trees.

In a still further possible embodiment of the method according to the first aspect of the present invention, the structural relations comprise parent-child relations of nodes within the BoM trees.

In a further possible embodiment of the method according to the first aspect of the present invention, matching nodes of an additional BoM tree are assigned to a cluster for which it has a highest calculated similarity score, to a cluster for which it has the highest similarity to the most similar item within each cluster, and/or to a cluster for which it has the highest similarity to the least similar item across all clusters.

In a possible embodiment of the method according to the first aspect of the present invention, the unpruned BoM graph is pruned to generate the unified BoM data model.

In a further possible embodiment of the method according to the first aspect of the present invention, the pruning of the BoM graph keeps longest paths from the root node of the unpruned BoM graph to the other nodes of the unpruned BoM graph.

In a further possible embodiment of the method according to the first aspect of the present invention, the pruning of the BoM graph keeps the most frequent paths from the root node of the unpruned BoM graph to the other nodes of the unpruned BoM graph.

In a still further possible embodiment of the method according to the first aspect of the present invention, redundant nodes within the unpruned BoM graph are merged to generate the unified BoM data model.

In a still further possible embodiment of the method according to the first aspect of the present invention, the similarity scores are approximated by performing Nyström approximation on the basis of a similarity matrix provided for clusters and nodes.

In a still further possible embodiment of the method according to the first aspect of the present invention, the service provided on the generated unified BoM data model comprises a maintenance service for the complex industrial system, a repair service for the complex industrial system and/or an update service for the complex industrial system.

The invention further provides according to a further aspect a computer implemented service provision platform comprising the features of claim 16.

The invention provides according to the second aspect a computer implemented service provision platform adapted to provide a service to a complex industrial system, said platform comprising

a database which stores Bill of Material, BoM, trees of system component instances of said complex industrial system, at least one processor adapted to generate automatically a unified BoM data model by clustering matching nodes within the BoM trees, and

a service provision engine adapted to provide a selected service for the complex industrial system based on the generated unified BoM data model stored in the database.

The invention further provides according to a further aspect a computer program product comprising the features of claim 17.

The invention provides according to the third aspect a computer program product comprising instructions adapted to perform the method according to the first aspect of the present invention.

In the following, possible embodiments of the different aspects of the present invention are described in more detail with reference to the enclosed figures.

Fig. 1     shows a schematic diagram showing a conventional service request processing to illustrate a problem underlying the present invention;

Fig. 2     shows a flowchart for illustrating a possible exemplary embodiment of a method for providing a service for a complex industrial system according to an aspect of the present invention;

Fig. 3     shows a block diagram for illustrating a possible exemplary embodiment of a computer implemented service provision platform according to a further aspect of the present invention;

Fig. 4     shows a schematic diagram for an exemplary use case for illustrating the method and system according to the present invention;

Fig. 5     illustrates an example of a component design with an unaligned data model to illustrate the operation of a method and system according to the present invention;

Fig. 6     illustrates unaligned BoM data structures illustrating the operation of the method and system according to the present invention;

Fig. 7     shows a set of BoM data structures illustrating the operation of a method and system according to the present invention;

Fig. 8     illustrates an example of a single iteration of a unified data structure generation algorithm employed by the method and system according to the present invention;

Fig. 9     shows a graph for illustrating pruning of paths as employed in a possible embodiment of the method and system according to the present invention;

Figs. 10, 11, 12     illustrate different possible embodiments for performing a pruning of a BoM graph as performed by a method and system according to the present invention;

Fig. 13     shows a flowchart for illustrating a possible use case of a method and system according to the present invention.

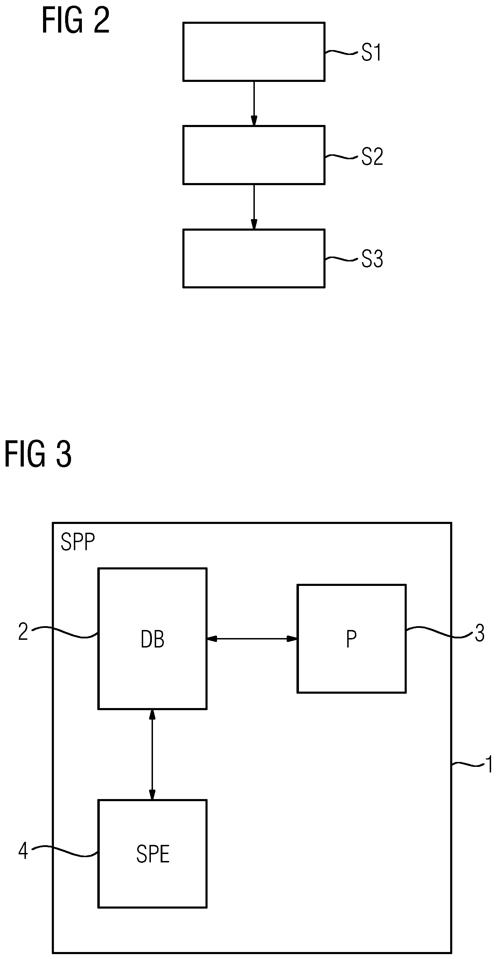

As can be seen in the flowchart of Fig. 2, the computer implemented method for providing a service for a complex industrial system can comprise several main steps. In the illustrated exemplary embodiment of Fig. 2, the computer implemented method according to the present invention for providing a service such as a maintenance service for a complex industrial system such as an automation system can comprise three main steps S1, S2, S3.

In a first step S1, Bill-of-Materials, BoM, trees of system component instances of the complex industrial system are provided.

In a further step S2, a unified BoM data model is generated automatically by clustering matching nodes within the BoM trees provided in step S1.

In a further step S3, a service is provided for the complex industrial system based on the generated unified BoM data model. The service provided on the generated unified BoM data model in step S3 can comprise in a possible embodiment a maintenance service of a complex industrial system. Further, the service provided by the generated unified BoM data model can also comprise a repair service of the complex industrial system. In a still further possible embodiment, the service provided on the generated unified BoM data model in step S3 can also comprise an update service of the complex industrial system, in particular an update service of a software component within the complex industrial system.

Each BoM tree of system component instances of the complex industrial system provided in step S1 is configured to represent a corresponding physical system component instance and can be stored in a possible embodiment in a central or distributed database of a computer implemented service provision platform. The BoM tree of a system component instance comprises a rooted tree including a set of nodes representing subcomponents of the system component instance connected via a set of edges representing relations between the subcomponents of the respective system component instance. Each node of a BoM tree representing a subcomponent of a system component instance can comprise attached attributes indicating properties of the respective subcomponent. In a possible embodiment of the method illustrated in the flowchart of Fig. 2, a unified BoM data model is generated in step S2 iteratively starting from an initial set of clusters derived from nodes of a reference BoM tree by performing a bipartite matching between a current set of clusters and nodes of an additional BoM tree to merge matching nodes of the additional BoM tree into the current set of clusters and forming an additional cluster for each not-matching node of the additional BoM tree. The resulting clusters are connected as nodes in an unpruned BoM graph.

In a possible embodiment, the bipartite matching in step S2 is performed on the basis of a calculated similarity score between a cluster and a node of the additional BoM tree. The calculated similarity score takes into account the structural relations of nodes within the BoM trees and/or the attributes attached to the respective nodes in the BoM trees. The structural relations comprise parent-child relations of nodes within the BoM trees.

A matching node of an additional BoM tree can be either assigned to a cluster for which it has a highest calculated similarity score, to a cluster for which it has a highest similarity to the most similar item within each cluster or to a cluster to which it has the highest similarity to the least similar item across all clusters.

In a possible embodiment, the unpruned BoM graph generated in step S2 is pruned to generate the unified BoM data model used in step S3 to perform a service for the complex industrial system. The pruning of the BoM graph can keep in a possible embodiment the longest path from the root node of the unpruned BoM graph to the other nodes of the unpruned BoM graph. In an alternative embodiment, the pruning of the BoM graph keeps the most frequent path from the root node of the unpruned BoM graph to the other nodes of the unpruned BoM graph. In a possible embodiment, redundant nodes within the unpruned BoM graph are merged automatically to generate the unified BoM data model used in step S3 for performing a selected service for the complex industrial system.

In a possible embodiment of the computer implemented method according to the present invention as illustrated in the flowchart of Fig. 2, the bipartite matching performed in step S2 for generating automatically the unified BoM data model can be performed on the basis of a calculated similarity score between a cluster and a node of an additional BoM tree. In a possible embodiment, similarity scores are approximated by performing Nyström approximation on the basis of a similarity matrix provided for clusters and nodes.

The invention further provides according to a further aspect a computer implemented service provision platform SPP 1 as illustrated schematically in the block diagram of Fig. 3. The computer implemented service platform 1 comprises in the illustrated embodiment a database 2 which stores Bill-of-Material, BoM, trees of system component instances of the respective complex industrial system, for instance an industrial automation system. The computer implemented service provision platform 1 further comprises at least one processor 3 adapted to generate automatically a unified BoM data model by clustering matching nodes within the BoM trees. The computer implemented service provision platform 1 as illustrated in Fig. 3 further comprises a service provision engine SPE 4 adapted to provide a selected service for the complex industrial system based on the generated unified BoM data model stored in the database 2 of the computer implemented service provision platform 1.

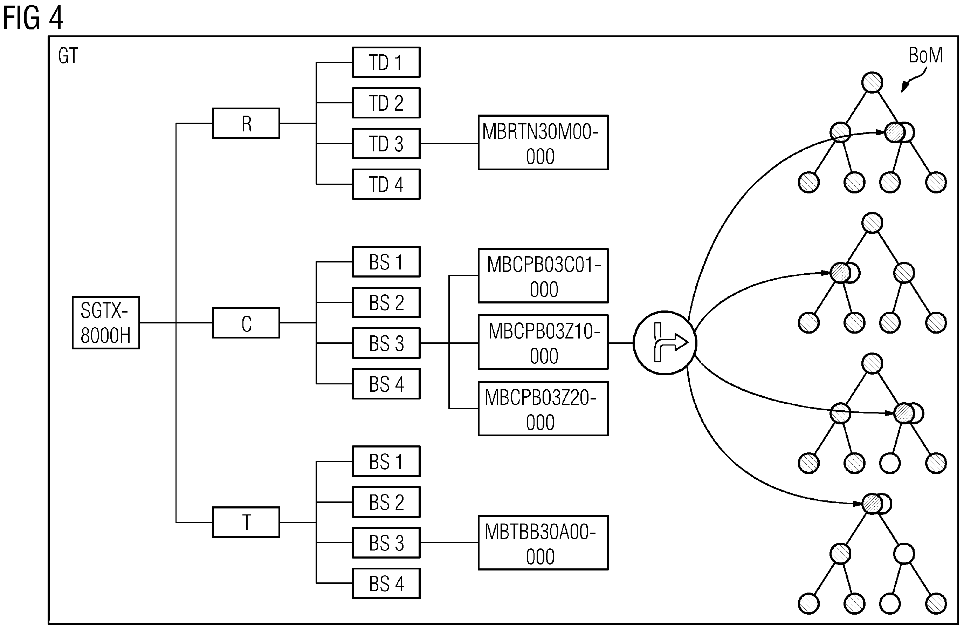

Fig. 4 illustrates an example of a complex industrial system such as a gas turbine. In the illustrated example, a complex gas turbine (SGTX-8000H), comprises three main subsystems or main components, i.e. a rotor R, a compressor C and a turbine T. Each subsystem or main component comprises in turn subsystems and components. For instance, the rotor R comprises several turbine discs TD1 to TD4 as illustrated in Fig. 4. The second subsystem, i.e. the compressor C, can for instance comprise blade stages BS1 to BS4. The third main component or subsystem, e.g. the turbine T of the gas turbine can comprise several components such as blade stages BS1 to BS4. The subcomponents can comprise parts of further subcomponents. For instance, the turbine disc TD3 (RTN30) can comprise a subcomponent MBRTN30M00-000 as shown in the diagram of Fig. 4. A subcomponent can comprise several subcomponents such as the blade stage BS3 of the subsystem compressor C including a subcomponent or part MBCPB03C01-000, MBCPB03Z10-000 and MBCPB03Z20-000. In the example of Fig. 4, the blade stage component BS3 of the turbine subsystem T comprises also subcomponent MBTBB30A00-000. Fig. 4 shows on the left side a unified view over component references with concrete locations and possible BoM trees for subcomponents. The unified structure on the left-hand side of Fig. 4 has references to the individual machines BoM data structures on the right side of Fig. 4. This way, the search of fitting spare parts can be performed on a unified data structure and has not to be performed for each individual machine.

The data within a BoM data structure or BoM tree can be modelled as a rooted tree $T = <V,E>$, where V represents a set of nodes corresponding to the BoM components and $E = \{(v_i, v_j)\}$ represents a set of edges that represent the composition relations between material nodes, i.e. nodes representing physical components of a complex industrial system. This means that the root node in a BoM tree represents the composition of the whole machine. Additional information contained in each of the material's specification can be represented as attributes of the nodes indicating properties of the respective physical subcomponent. The attributes can comprise for instance a textual description of the component for indicating its quantity within the system. Each node of the BoM tree representing a subcomponent of the respective system component instance can comprise one or more attached attributes indicating properties of the respective subcomponent. These properties can comprise logical properties and/or physical properties of the respective subcomponent.

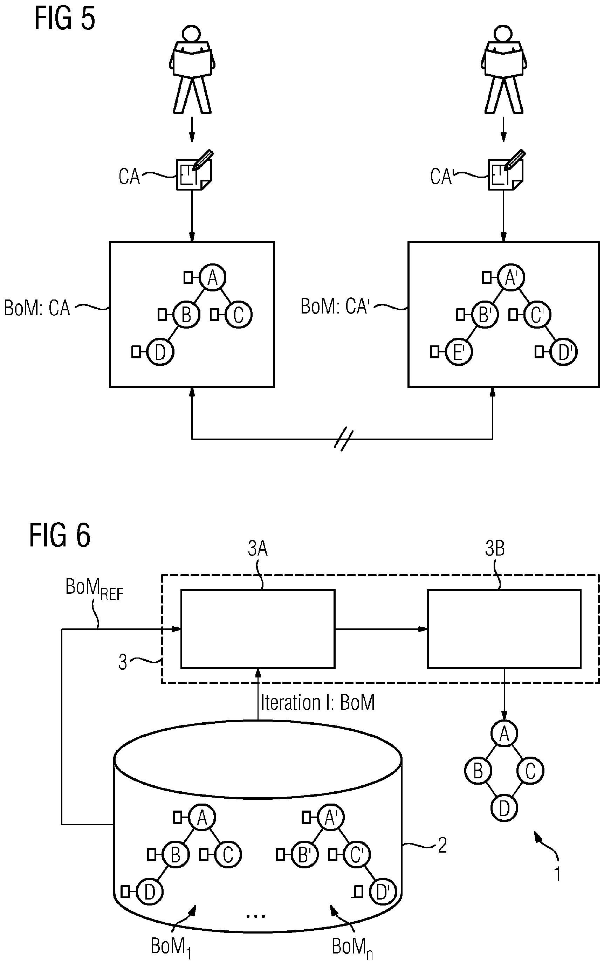

Fig. 5 shows two engineers who specify a compressor design of a compressor C within a gas turbine with a similar configuration. However, as can be seen in Fig. 5, there is a mismatch in material nodes and the composition relation in the respective BoM trees. Accordingly, even if the compressor is identical in the physical world, the two engineers may have a different conception of the respective compressor leading to slightly different BoM trees as shown in Fig. 5. For instance, in Fig. 5, the second design engineer generates a Bill-of-Material, BoM, tree for the compressor including a subcomponent D' of the component C' missing in the BoM tree provided by the first design engineer for the same compressor. Also, the different design engineers may attach different attributes to the same components of the compressor. Fig. 5 illustrates how two machine component specifications of the same configuration may be represented by differing BoM data structures or BoM trees having different sets of nodes with different relations and/or attributes.

These mismatches between the data models can have different reasons. For example, there may be a different level of detail. Some specifications might be more detailed than others. This can lead to a deeper BoM tree with more nodes for some specifications.

Further, there can be special customer requirements. Certain components or subsystems of the respective complex industrial system may need to follow customer-specific or country-specific requirements, such that certain nodes or even whole subtrees within the BoM tree of the respective component have to be designed differently.

A further source for a mismatch can be different compositional preferences of the respective engineer. Engineers may have a different view on how components relate to each other or are composed. This results in BoM trees that may provide a parent-child relation in one machine, but a sibling relation in the other.

However, it can be assumed that BoM tree structures of different physical machines or components stemming from the same product family, do not completely change or emerge randomly. Engineers, i.e. design engineers, still share the same expertise and technical know-how. This implies that the engineers declare similar composition relations between components with a corresponding data structure. Furthermore, physical boundaries, engineering best practice and company regulations force the engineers generating the BoM trees to use similar attributes to describe each component, e.g. in terms of quantity. For example, most vehicles comprise four wheels.

The same holds for compositionality. It can be expected that for most components, a parent-child relation is preserved and cannot be reversed. For example, a motor as a parent entity can have rotors as child entities and not the other way around. The above-mentioned commonalities in structural features among BoM trees of components are exploited by the computer implemented method according to the present invention to perform a unification procedure.

The method according to the present invention can perform in a possible implementation an iterative graph-based entity resolution algorithm that can be based on a clustering of nodes between different BoM tree structures stored in a database.

Fig. 6 presents a schematic overview of a unified structure generation algorithm which can be used as a computer implemented method according to the present invention in a possible embodiment. In the platform illustrated in the block diagram of Fig. 6, a computer implemented service provision platform SPP can comprise a database 2 which stores a plurality of Bill-of-Materials, BoM, trees of system components instances of a complex industrial system such as an automation system. In the illustrated example of Fig. 6, the database 2 stores n BoM trees forming variations concerning the same physical component such as a compressor within a gas turbine system. The database 2 can initially store unaligned BoM data structures or BoM trees wherein nodes represent subcomponents and edges represent compositional relations. Further, the squares illustrated in Fig. 6 represent attributes attached to components. The computer implemented platform 1 illustrated in the block diagram of Fig. 6 comprises at least one processing unit 3 which can be used for performing the generation of a unified BoM data model by clustering matching nodes within the provided BoM trees read from the database 2 of the platform 1. The processing unit 3 can be used for cluster merging and/or BoM graph pruning. In the illustrated embodiment of Fig. 6, the unified BoM data model can be generated iteratively starting from an initial set of clusters derived from nodes of a reference BoM tree by performing a bipartite matching between a current set of clusters and nodes of an additional BoM tree to merge the matching nodes of the additional BoM tree into a current set of clusters and by performing an additional cluster for each not-matching node of the additional BoM tree. The resulting clusters can then be connected to nodes in an unpruned BoM graph. The generation of the unpruned BoM graph can be performed by a cluster merge unit 3A of the processing unit 3 as illustrated in Fig. 6. A pruning processing unit 3B can then be used to prune the unpruned BoM graph provided by a cluster merge subunit 3A. Fig. 6 illustrates schematically a pruned BoM graph output by the pruning subunit 3B. The unpruned BoM graph is pruned by the pruning unit 3B to generate the unified BoM data model which can be supplied to a service provision engine 4 as illustrated in the block diagram of Fig. 3. The service provision engine 4 can be adapted to provide a selected service for the complex industrial system based on the generated unified BoM data model which may be also stored in the database 2 of the platform 1. In a possible embodiment, pruning of the BoM graph performed by the pruning unit 3B can keep the longest path from the root node of the unpruned BoM graph to the other nodes of the unpruned BoM graph provided by the cluster merge subunit 3A. In an alternative embodiment, the pruning of the BoM graph by the pruning unit 3B keeps the most frequent path from the root node of the unpruned BoM graph to the other nodes of the unpruned BoM graph. Further, redundant nodes within the unpruned BoM graph can be merged automatically to generate the unified BoM data model.

The cluster merge algorithm can be employed by the cluster merge unit 3A by iterating through a set of BoM data structure instances, wherein at each step every existing cluster is merged with the best matching element from the current BoM structure instance.

The following illustrates a possible implementation of a cluster merge algorithm performed by the cluster merge subunit 3A illustrated in the block diagram of Fig. 6.

```
Algorithm: Cluster-Merge
Input: Set of BoM-structures B, initial set of clusters C
Output: Super-graph Structure S
For bom in B:
   For component in bom:
      best_matching_score = -Inf
      best_matching_cluster = None
      For cluster in C:
         score = linkage(component, cluster)
         If score > best_matching_score:
            best_matching_score = score
            best_matching_cluster = cluster
         Else:
            expand-clusters(C, component)
   For cluster in C:
      Best_item = arg max score in best_matching_cluster
      Cluster.add(best_item)
      S = merge-nodes(S, cluster, best_item)
return S
```

As can be seen, when clusters (groups of aligned components) are merged with a new item, a super-graph structure merges the individual nodes in the trees and carries over all existing edges from their original structure.

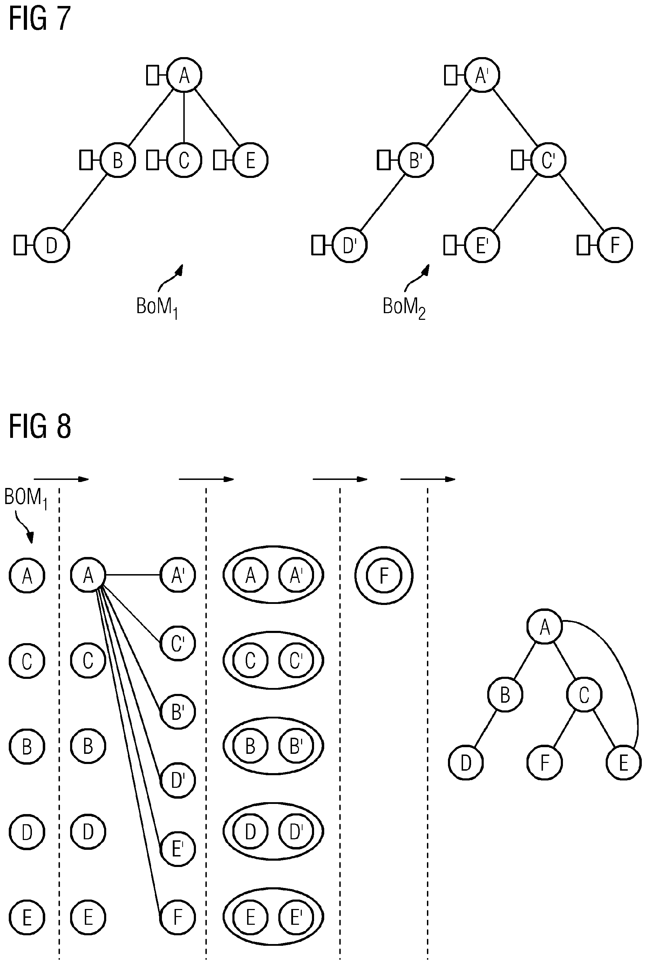

Figs. 7, 8 illustrate this approach for an initial data structure for BoM tree BoM1 and a second data structure for BoM tree BoM2 by merging the clusters and by alignment of the respective super-graph (which is no longer a tree as illustrated in Fig. 8). The unified BoM data model or super-graph on the right side of Fig. 8 is generated in the illustrated embodiment by iteratively starting from an initial set of clusters derived from nodes of a reference BoM tree by performing a bipartite matching between a current set of clusters and nodes of an additional BoM tree to merge matching nodes of the additional BoM into the current set of clusters and forming an additional cluster (expanding clusters) for each not-matching node of the additional BoM tree. As illustrated in Fig. 8, an initial set of clusters is derived from the nodes of the reference BoM tree which in the given example of Fig. 7 is the BoM tree 1 illustrated on the left side of Fig. 7. The illustrated BoM tree 1 comprises nodes A, B, C, D, E forming the initial set of clusters used by the unification algorithm. For each cluster of the initial set of clusters, a bipartite matching is performed with the nodes of an additional BoM tree which is formed in the given example by the BoM tree BoM tree 2 shown on the right side of Fig. 7. The second BoM tree 2 illustrated in Fig. 7 comprises in the given example one non-matching node, i.e. node F. The remaining nodes of BoM tree 2 can be matched with the existing clusters as illustrated in the middle of Fig. 8. For each not-matching node, i.e. node F of the additional BoM tree, i.e. BoM tree 2, an additional cluster is formed as shown in Fig. 8 (expand cluster). The resulting clusters are connected as nodes within a super-graph structure, i.e. an unpruned BoM graph as illustrated in Fig. 8. The unpruned BoM graph can then be pruned to generate the unified BoM data model stored in the database 2 of the platform 1. The unified data model can then be used by the service provision engine 4 to provide a selected service such as a maintenance service for the respective complex industrial system. Since the super-graph structure illustrated in Fig. 8 represents a union of the links of merged nodes in a cluster, the matching of further elements to the clusters does consider its similarity to the union of the parents and children as well. In other words, the matching to a cluster gets more robust as more items are included. This can mitigate wrongly assigned items by a collective comparison. Bipartite matching as illustrated in Fig. 8 can be performed on the basis of a calculated similarity score between a cluster and a node of any additional BoM tree such as BoM tree 2 shown in Fig. 7. In a preferred embodiment, the calculated similarity score can take into account both the structure relations of nodes within the BoM trees but also the attributes attached to the respective nodes in the BoM trees.

Since each material specification can be provided with attached attributes such as a textual description or an indicated quantity or any other kind of metadata, it is possible to incorporate an attribute-based similarity measure that can determine a degree of similarity between two nodes in different BoM trees. For textual description, this can for example be provided by performing a fuzzy string matching. In case of multiple attributes to be considered for similarity, further a weighting scheme can be employed to reflect main expert knowledge or reflect labelled training data.

A graph-based similarity for pairs of BoM items within BoM trees can comprise in a possible embodiment two similarities. A first similarity comprises an attribute-based similarity of parents (there is exactly one parent for each BoM tree item since it is a tree). Further, it comprises an aggregated pairwise attribute-based similarity for every children pair combination (e.g. fuzzy jaccard similarity). The following illustrates a possible implementation of a calculated graph-based similarity.

```
Function graph-similarity(component, item):
score = weight_parents * attribute-similarity (compo-
nent.parent, item.parent)
For child_a in component.children:
    # fuzzy jaccard similarity
    max _match= 0
    For child_b in item.children:
        tmp_score = attribute-similarity(child_a, child_b)
    If tmp_score > max_match:
        max_match = tmp_score
    score += max_match
score = weight_children * (score / max(|component.children|,
|item.children|))
return score
```

By iterating through all BoM data structures, the clusters grow and material nodes of the current machine iteration need to be merged into a whole cluster. For this, different linkage techniques can be employed. Linkage techniques comprise a min-linkage (merge item to cluster to which it has the highest minimum score), a max-linkage (merge item to cluster to which it has the highest minimum score) and an average-linkage (merge item to cluster to which it has the highest average score).

The following illustrates a possible implementation of a linkage function

**Function** *linkage* (component, cluster):

score = 0

current_best_score = -Inf

   **For** item in cluster:

      score += *attribute-similarity(component, item) # weighted aggregation (min, max, avg)*

      **If** score < current_best_score + maximum_graph_similarity:

        **continue** # *search space pruning: don't consider graph-similarity if best_match can't be reached*

      *Score += graph-similarity(component, item)*

   **return** score

The super-graph structure illustrated in Fig. 8 on the right side is the result of the merging algorithm and can serve as a first unified view to a user. Since the resulting unified structure should again reflect a BoM structure, it should form a BoM tree structure as well. Accordingly, in a preferred embodiment, a pruning unit 3B is provided to perform pruning of the super-graph structure of a BoM graph resulting from the unification algorithm. In a possible embodiment, the pruning unit 3B can use different pruning strategies that may reflect domain expertise on how a human engineer would prune paths to recover a unified BoM tree structure.

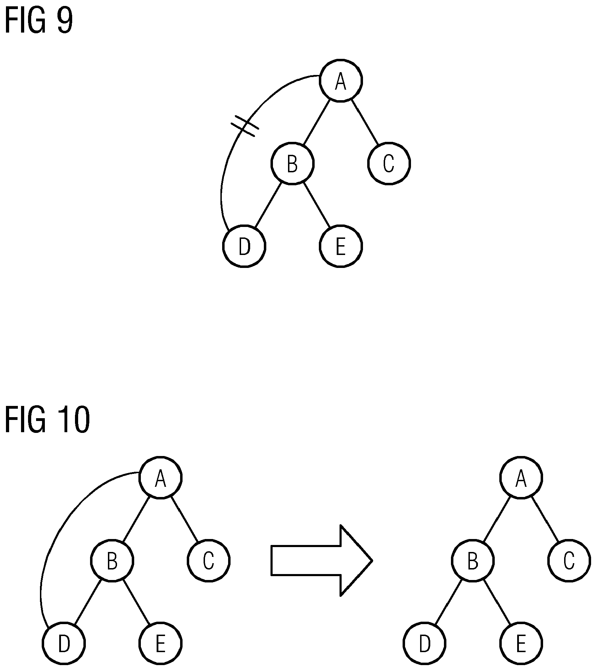

Fig. 9 illustrates schematically pruning of redundant paths from a parent node to a child node.

Figs. 10, 11, 12 illustrate different possible embodiments, where an unpruned BoM graph is pruned to generate a unified BoM data model. In the embodiment illustrated in Fig. 10, the pruning of a BoM graph keeps longest paths from a root node of the unpruned BoM graph to the least nodes of the unpruned BoM graph. This corresponds to a concept of transitive reduction. As illustrated in Fig. 10, in this embodiment, pruning keeps the longest paths from the root node to all other vertices or nodes in the super-graph. A possible approach is to use a modified version of a spanning tree algorithm where an objective function is modified to account for paths from the root node, e.g. root node A as illustrated in Fig. 10.

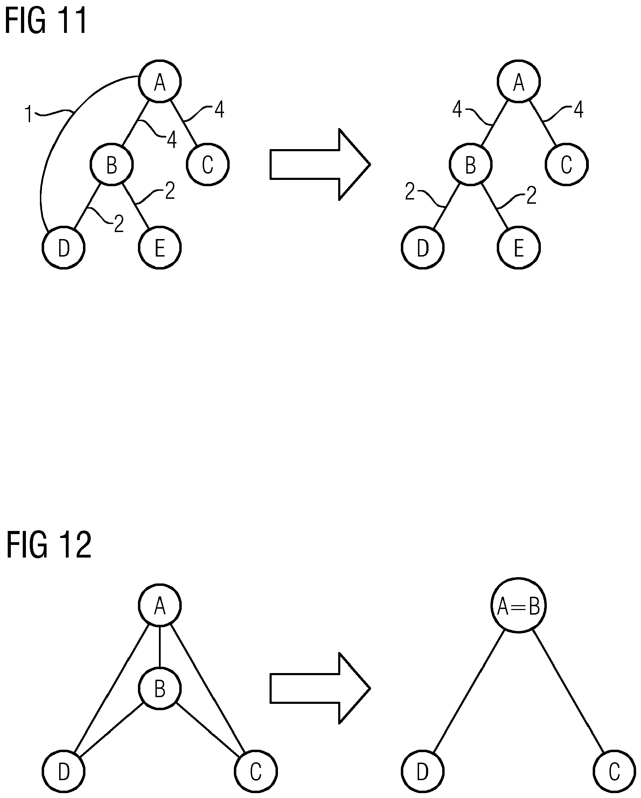

In an alternative embodiment, pruning is performed as illustrated in context with the schematic diagram of Fig. 11. In this embodiment, the pruning of the BoM graph keeps the most frequent path from the root node of the unpruned BoM graph to the other nodes of the unpruned BoM graph. In this approach, weights on the edges are considered. When creating the super-graph from the merged clusters, weights can be assigned to the edges depending on how many BoM data structures contain the corresponding edge. Then to prune the redundant paths in the resulting super-graph, the maximum cost spanning tree algorithm can be used to provide an unpruned BoM graph forming the unified BoM data model.

Further, as illustrated in Fig. 12, redundant nodes within the unpruned BoM graph can be merged to generate the unified BoM data model. Pruning of a redundant parent node can be performed that has the exact same child links as one of its children nodes. In case that a parent node has the same child links as one of its children nodes, the parent node and the corresponding child node can be merged as illustrated schematically in Fig. 12. Here, in a possible embodiment, a graph compression algorithm can be applied to prune the super-graph.

Due to the iterative nature of the method for generating the unified BoM data model, new components or machines can be merged into an existing super-graph structure by executing a cluster-merge algorithm. Since the cluster-merge algorithm performed by the cluster-merge subunit 3A requires to compare new items to all existing items within a cluster, it is possible to introduce a subsampling procedure that only picks, e.g. log(n) representatives of a cluster and uses these picks for comparison. Further, in a possible embodiment, techniques like alpha-beta pruning can be applied to prune the search space. For example, if the attribute-based similarity already disqualifies for a best match, there is no need to consider children or parents in the respective graph.

In a possible embodiment, to ensure efficient execution over large sets of BoM trees, the method according to the present invention can provide a distributed implementation of the underlying algorithms. In particular, since the ordering of BoM structures in the iterative clustering does influence the outcome, running multiple clusterings in parallel and calculating averages of the results can contribute to the stability and quality of the output without impacting negatively the runtime of the platform 1.

In a possible embodiment, the similarity scores can be approximated by performing a Nyström approximation on the basis of a similarity matrix provided for clusters and nodes.

In the cluster-merge algorithm, a m x n similarity matrix **B** between **m** clusters and **n** components in the current iteration's machine can be provided:

$$B = \begin{pmatrix} b_{1l} & \cdots & b_{1m} \\ \vdots & \ddots & \vdots \\ b_{n1} & \cdots & b_{nm} \end{pmatrix} \tag{1}$$

The matrix can represent one block in the full Kernel matrix (mn) x (mn) :

$$K = \begin{pmatrix} k_{1l} & \cdots & k_{1(mn)} \\ \vdots & \ddots & \vdots \\ k_{(mn)1} & \cdots & k_{(mn)(mn)} \end{pmatrix} \tag{2}$$

The Kernel matrix K comprises similarity scores between components and clusters.

The full Kernel can be written then in block-matrix form as follows:

$$K = \begin{pmatrix} A & B \\ B^r & C \end{pmatrix} \tag{3}$$

The Nyström approximation can be defined as follows:

$$R = B\, A^{-1} B^T \tag{4}$$

wherein B does not have to be the full m x n matrix but can be much smaller.

Low-rank approximations based on sampling data points from the full Kernel matrix can be used in a possible embodiment to speed up the similarity comparison. In particular, the Nyström approximation can be done efficiently if the rank of the Kernel is much lower than its dimensionality. It can be shown that if rank (K) = 1 and 1 is lower than ~¼ mn, then the Nyström approximation is computationally less complex than just fully computing the full m x n matrix B.

The method according to the present invention provides for a high accuracy in BoM structure matching. The method further provides for a fast execution of structure matching. With the method according to the present invention it is possible to automatically generate a superseding unified structure that reflects domain expert rules on merging structures.

The method provides in a possible embodiment a combination of attribute-based and structured similarity. The method according to the present invention supports a dynamic expansion of a set of clusters respecting the notion that one wants to preserve a superseding structure that includes all material nodes even if they are only present in a small subset of machines.

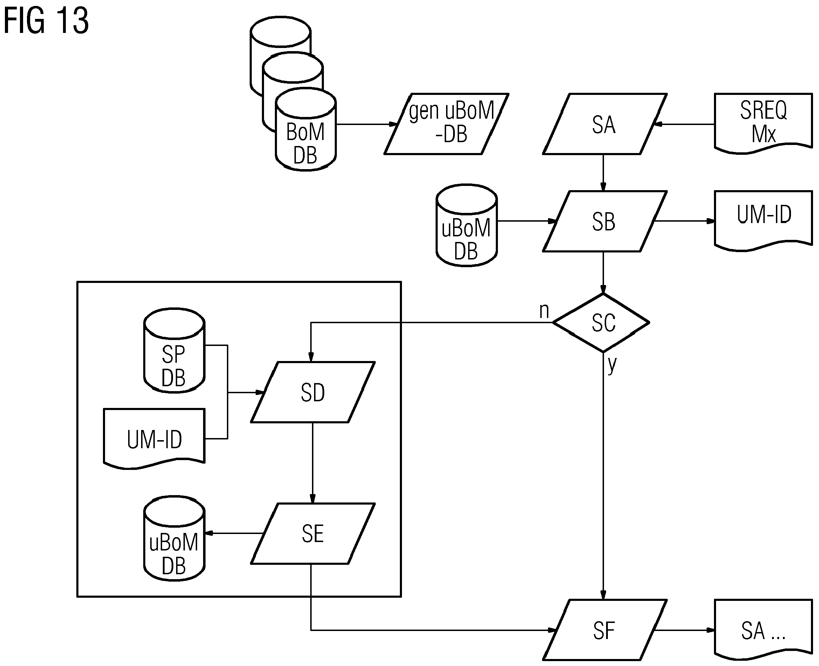

Fig. 13 illustrates a use case for the method and system according to the present invention. The illustrated flowchart shows the processing of a service request SREQ for a machine X, i.e. an instance of a complex industrial system. The requested service can be for instance a requested maintenance service to find a fitting spare part for a component of a complex industrial system such as an automation system. After having received the service request SREQ the incoming service request SREQ can be analysed in step SA as illustrated in Fig. 13. In a further step SB, a lookup of a material specification can be performed in a unified BoM data model stored in a unified BoM database 2 of the platform 1 as shown in Fig. 3. This unified BoM data model is generated automatically by performing a computer implemented method according to the first aspect of the present invention as illustrated in the flowchart of Fig. 2 on the basis of BoM trees of system component instances of the respective complex industrial system. The lookup performed in step SB provides for a unified component ID (UM-ID). In a further step SC, it can be checked whether there is a spare part assigned and/or associated and identified by a corresponding node within the tree. If this is not the case, a fitting spare part can be searched in step SD on the basis of a spare part database SP-DB using the unified component ID provided by step SB. After the fitting spare part has been found in step SD, the unified BoM database can be updated in step SE as illustrated in Fig. 13. Further, in step SF, the respective service action SA can be finalized, for instance a repair, maintenance or upgrade service action. The specified service action SA including the identified spare part can be output by the platform 1 as illustrated in Fig. 13.

The computer implemented method and platform 1 provides the further advantage that a reduced number of spare parts have to be kept in stock. Accordingly, the consistent clearance or search for spare parts reduces the complexity of the logistics. The method and platform 1 according to the present invention provide for a unification of multiple large-scale BoM data structures in an iterative fashion with possibly using fuzzy correspondence. The system 1 provides the possibility to define attribute-based and graph-based similarity functions as well as weightings for component attributes and their compositional relations. The method and system 1 according to the present invention can provide a graph-based BoM data structure as a result that approximately resembles a merged version of the input BoM structures. The method and system 1 according to the present invention can be used for any kind of complex systems, in particular a complex industrial system such as automation systems.

**Claims**

1. A computer implemented method for providing a service for a complex industrial system,
   the method comprising the steps of:

   - providing (S1) Bill of Materials, BoM, trees of system component instances of said complex industrial system;
   - generating (S2) automatically a unified BoM data model by clustering matching nodes within the provided BoM trees; and
   - performing (S3) the service for the complex industrial system based on the generated unified BoM data model.

2. The method according to claim 1, wherein each BoM tree is configured to represent a corresponding physical system component instance and is stored in a central or distributed database (2).

3. The method according to claim 2, wherein the BoM tree of a system component instance is a rooted tree including a set of nodes representing subcomponents of the system component instance connected via a set of edges representing relations between the subcomponents of the system component instance.

4. The method according to claim 3, wherein each node of a BoM tree representing a subcomponent of the respective system component instance comprises attached attributes indicating properties of the respective subcomponent.

5. The method according to any of the preceding claims 1 to 4, wherein the unified BoM data model is generated iteratively starting from an initial set of clusters derived from nodes of a reference BoM tree by performing a bipartite matching between a current set of clusters and nodes of an additional BoM tree to merge matching nodes of the additional BoM tree into the current set of clusters and forming an additional cluster for each not-matching node of the additional BoM tree,
   wherein the resulting clusters are connected as nodes in an unpruned BoM graph.

6. The method according to claim 5, wherein the bipartite matching is performed on the basis of a calculated similarity score between a cluster and a node of the additional BoM tree.

7. The method according to claim 6, wherein the calculated similarity score takes into account the structural relations of nodes within the BoM trees and/or attributes attached to the respective nodes in the BoM trees.

8. The method according to claim 7, wherein the structural relations comprise parent-child relations of nodes within the BoM trees.

9. The method according to any of the preceding claims 6 to 8,
   wherein a matching node of an additional BoM tree is assigned
   to a cluster for which it has a highest calculated similarity score;
   to a cluster for which it has the highest similarity to the most similar item within each cluster, or
   to a cluster for which it has the highest similarity to the least similar item across all clusters.

10. The method according to claim 5, wherein the unpruned BoM graph is pruned to generate the unified BoM data model.

11. The method according to claim 10, wherein the pruning of the BoM graph keeps longest paths from the root node of the unpruned BoM graph to the other nodes of the unpruned BoM graph.

12. The method according to claim 10, wherein the pruning of the BoM graph keeps the most frequent paths from the root node of the unpruned BoM graph to the other nodes of the unpruned BoM graph.

**13.** The method according to any of the preceding claims 10 to 12, wherein redundant nodes within the unpruned BoM graph are merged to generate the unified BoM data model.

**14.** The method according to any of the preceding claims 6 to 13, wherein the similarity scores are approximated by performing Nyström approximation on the basis of a similarity matrix provided for clusters and nodes.

**15.** The method according to any of the preceding claims 1 to 14, wherein the service provided on the generated unified BoM data model comprises

- a maintenance service of the complex industrial system,
- a repair service of the complex industrial system, and/or
- an update service of the complex industrial system.

**16.** A computer implemented service provision platform, SPP, (1) adapted to provide a service to a complex industrial system,
said platform (1) comprising:

- a database (2) which stores Bill of Material, BoM, trees of system component instances of said complex industrial system,
- at least one processor (3) adapted to generate automatically a unified BoM data model by clustering matching nodes within the BoM trees, and
- a service provision engine, SPE, (4) adapted to provide a selected service for the complex industrial system based on the generated unified BoM data model stored in the database (2).

**17.** A computer program product comprising instructions adapted to perform the method according to any of the preceding claims 1 to 15.

# FIG 1

# FIG 2

# FIG 3

FIG 4

EP 3 671 579 A1

FIG 5

BoM: CA

BoM: CA'

FIG 6

BoM$_{REF}$

3A

3B

3

Iteration I: BoM

A

B    C

D

2

1

BoM$_1$

...

BoM$_n$

FIG 7

FIG 8

FIG 9

FIG 10

FIG 11

FIG 12

# FIG 13

EP 3 671 579 A1

Europäisches
Patentamt

European
Patent Office

Office européen
des brevets

## EUROPEAN SEARCH REPORT

Application Number

EP 18 21 4098

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/182873 A1 (SHAH AMIP J [US] ET AL) 19 July 2012 (2012-07-19) * paragraphs [0018], [0020], [0031] - [0042], [0059] - [0066]; figures 1-5 * | 1-17 | INV. G06Q10/00 |
| X | US 2011/161209 A1 (BOYD ALAN POTTER [US] ET AL) 30 June 2011 (2011-06-30) * paragraphs [0004] - [0006]; figures 1-7 * | 1-17 | |
| X | US 2014/364985 A1 (TIWARI MANOJ [IN] ET AL) 11 December 2014 (2014-12-11) * paragraphs [0020] - [0028]; figures 1-16 * | 1-17 | |
| X | VEGETTI M ET AL: "AN OBJECT-ORIENTED MODEL FOR COMPLEX BILLS OF MATERIALS IN PROCESS INDUSTRIES", BRAZILIAN JOURNAL OF CHEMICAL ENGINEERING, BRAZILAIN SOCIETY OF CHEMICAL ENGINEERING, SAO PAULO, BR, vol. 19, no. 4, 1 October 2002 (2002-10-01), pages 491-497, XP007901971, ISSN: 0104-6632, DOI: 10.1590/S0104-66322002000400019 * page 492, left-hand column, paragraph 1; figures 1-5 * * page 494, left-hand column, paragraph 1 - page 495, right-hand column, paragraph 2 * | 1-17 | TECHNICAL FIELDS SEARCHED (IPC) G06Q |

The present search report has been drawn up for all claims

| Place of search | Date of completion of the search | Examiner |
|---|---|---|
| Munich | 24 June 2019 | Bîrlescu, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 21 4098

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2019

| Patent document cited in search report | Publication date | Patent family member(s) | | Publication date |
|---|---|---|---|---|
| US 2012182873 A1 | 19-07-2012 | NONE | | |
| US 2011161209 A1 | 30-06-2011 | US 2011161209 A1 | | 30-06-2011 |
| | | US 2019005443 A1 | | 03-01-2019 |
| US 2014364985 A1 | 11-12-2014 | EP 2811439 A1 | | 10-12-2014 |
| | | US 2014364985 A1 | | 11-12-2014 |
| | | US 2017011342 A1 | | 12-01-2017 |

EPO FORM P0459

For more details about this annex : see Official Journal of the European Patent Office, No. 12/82